# EUROPÄISCHE PATENTANMELDUNG

(11) **EP 0 803 322 A1**
(43) Veröffentlichungstag der Anmeldung: **29.10.1997**
(21) Anmeldenummer: 97103850.0
(22) Anmeldetag: 07.03.1997
(51) Int. Cl.: B23Q 16/00, B23Q 1/62, B23Q 3/10

(54) **Vorrichtung zur Feineinstellung von Anschlägen**

(30) Priorität: 25.04.1996 DE 29607499 U
(71) Anmelder: Horst Witte Entwicklungs- und Vertriebs-KG, 21369 Nahrendorf (DE)
(72) Erfinder: Witte, Andreas, 21354 Bleckede (DE)
(74) Vertreter: von Raffay, Vincenz, Dipl.-Ing.

(57) **Zusammenfassung**

Die Vorrichtung zur Feineinstellung von Anschlägen, Aufnahmebolzen, Konturpaßstücken und dergleichen an Spannvorrichtungen ist insbesondere für Meß- und Werkzeugmaschinen einsetzbar, um an dieser Spannvorrichtung die genannten Stücke nach einer ersten Positionierung genau so einzustellen und zu bewegen, wie es für ein exaktes Aufspannen gewünscht wird. Hierzu ist ein erster Grundkörper (1) zur Befestigung an der Spannvorrichtung und eine Spannschraube (6) vorgesehen. An diesem ist ein Führungskörper (2) angeordnet, der in Achsrichtung der Spannschraube verstellbar ist. An diesem wiederum befestigt ist ein zweiter Führungskörper (3), der quer zur Achsrichtung der Spannschraube verstellbar ist. Ein an dem zweiten Führungskörper angeordneter Abschlußkörper (4) ist ebenfalls in dieser Ebene, aber senkrecht zur Verstellrichtung des zweiten Führungskörpers, verstellbar. Die Spannschraube geht durch sämtliche vier Körper hindurch. Wenn die Spannschraube gelöst ist, kann die gewünschte Verstellung vorgenommen werden. Nach Festziehen der Spannschraube nimmt der Abschlußkörper unverrückbar die gewünschte Position ein.

## Beschreibung

Die Erfindung betrifft eine Vorrichtung zur Feineinstellung von Anschlägen, Aufnahmebolzen, Konturpaßstücken und ähnlichen Teilen an Spannvorrichtungen, insbesondere für Meß- und Werkzeugmaschinen.

An derartigen Spannvorrichtungen sind eine Anzahl von Anschlägen, Aufnahmestücken und dergleichen vorgesehen, die nach einer ersten groben Positionierung sehr genau in allen drei Achsrichtungen eingestellt werden müssen. Dieses ist bisher nur in unbefriedigender Weise möglich. Entweder muß die gesamte Spannvorrichtung verstellt werden, oder aber der einzelne Anschlag oder das entsprechende Aufnahmestück müssen bearbeitet oder in anderer Weise einzeln ausgerichtet werden.

Der Erfindung liegt nun die Aufgabe zugrunde, eine Vorrichtung der eingangs genannten Art zu schaffen, durch die eine problemlose und insbesondere genaue Feineinstellung der genannten Anschläge und dergleichen in sämtlichen drei Achsrichtungen möglich ist.

Diese Aufgabe wird grundsätzlich durch den Anspruch 1 gelöst.

Dadurch, daß zwischen dem Grundkörper und dem Abschlußkörper zwei Führungskörper vorhanden sind, kann jeder Körper in eine Achsrichtung verstellt werden. Der erste Führungskörper wird in senkrechter Richtung, d.h. in Achsrichtung der Spannschraube verstellt. Der zweite Führungskörper wird in einer Ebene senkrecht zur Achsrichtung in einer bestimmten Richtung verstellt. Der Abschlußkörper ist ebenfalls in dieser Ebene verstellbar, aber senkrecht zu der Verstellrichtung des zweiten Führungskörpers. Hierdurch ist der Abschlußkörper in allen drei Richtungen, d.h. einmal in Richtung der Spannschraube und zum anderen beliebig in der Ebene verstellbar, die senkrecht zur Spannschraube liegt. Zum Verstellen wird die Spannschraube gelöst, dann erfolgt die Verstellung, anschließend wird die Spannschraube wieder festgezogen.

In Anspruch 3 ist eine Ausführungsform unter Schutz gestellt, bei der die Verstellung des ersten Führungskörpers in Achsrichtung der Spannschraube durch einen Gewindering erfolgt, der auf die Spannschraube aufgeschraubt ist.

Bei der Ausführungsform nach Anspruch 4 ist anstelle des Gewinderinges ein Ziehkeil vorgesehen, dessen Keilfläche auf einer angrenzenden Keilfläche des Grundkörpers aufliegt und durch eine gesonderte Stellschraube senkrecht zur Achsrichtung der Spannschraube verstellbar ist. Bei dieser Ausführungsform wird durch die Keilflächen eine größere Auflagefläche und damit eine bessere Sicherung gegen Kippen und Wackeln geschaffen.

Weitere vorteilhafte Ausgestaltungen sind Gegenstand der Ansprüche 2 und 5 bis 7.

Im folgenden wird die Erfindung unter Hinweis auf die Zeichnung anhand eines Ausführungsbeispieles näher erläutert.

Es zeigt:
- Fig. 1: eine explosionsartig auseinandergezogene perspektivische Darstellung einer Ausführungsform einer Vorrichtung nach der Erfindung;
- Fig. 2: die in Fig. 1 dargestellte Vorrichtung in zusammengebautem Zustand in der sog. "Nullstellung":
- Fig. 3: eine der Fig. 2 entsprechende Darstellung, jedoch verstellt in allen drei Achsrichtungen;

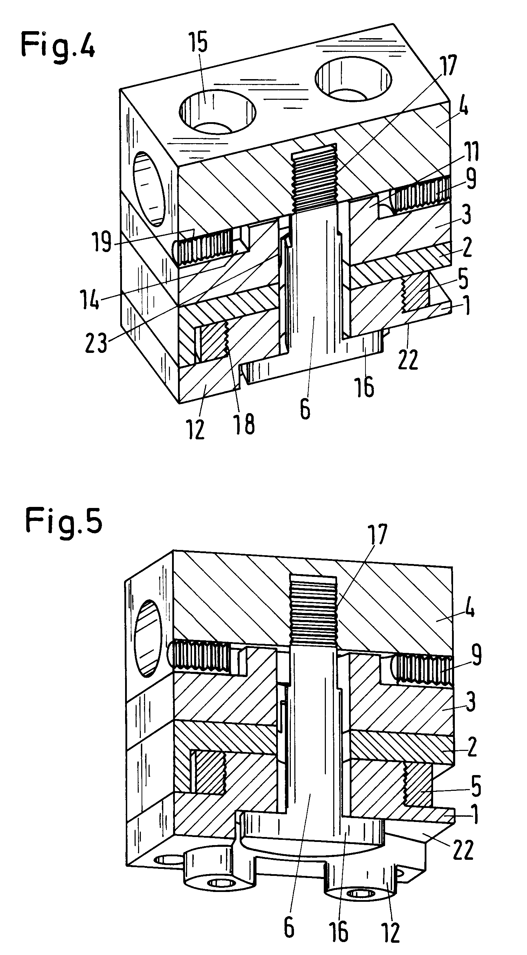

- Fig. 4: einen Schnitt durch die Darstellung der Fig. 2, gesehen schräg von oben;
- Fig. 5: einen der Fig. 4 entsprechenden Schnitt, jedoch gesehen schräg von unten; und
- Fig. 6: eine der Fig. 1 entsprechende explosionsartig auseinandergezogene perspektivische Darstellung einer weiteren Ausführungsform der Vorrichtung nach der Erfindung.

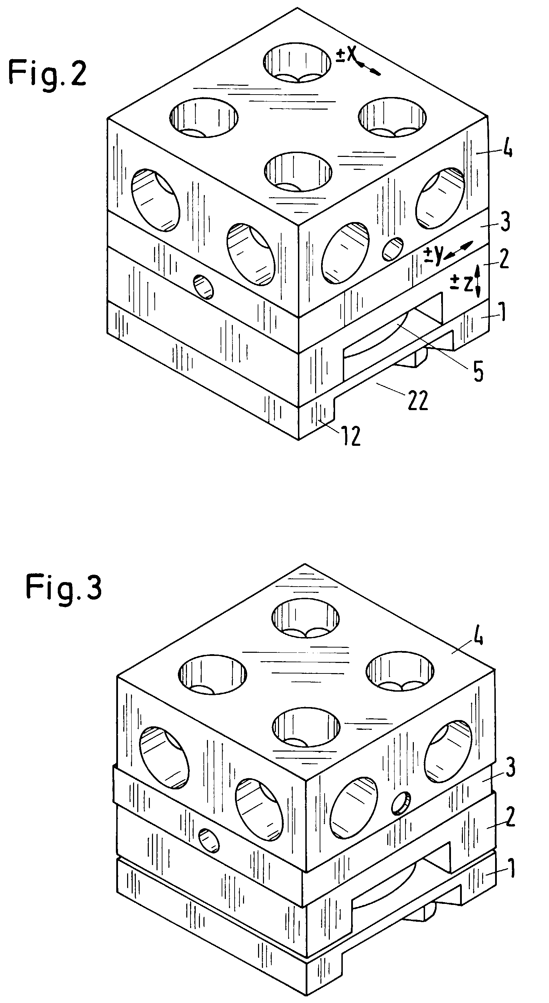

Die in der Zeichnung, bei der es sich sämtlich um perspektivische Darstellungen handelt, dargestellte Vorrichtung, besteht aus vier Körpern, einem Grundkörper 1, einem ersten Führungskörper 2, einem zweiten Führungskörper 3 und einem Abschlußkörper 4. Die Körper 2, 3 und 4 sind jeweils in einer Achsrichtung verstellbar. Der erste Führungskörper 2 in Z-Richtung, der zweite Führungskörper 3 in Y-Richtung und der Abschlußkörper 4 in X-Richtung. Diese Richtungen sind in Fig. 2 durch Pfeile angedeutet.

Durch sämtliche Körper 1 bis 4 geht eine Spannschraube 6 hindurch, die gelöst wird, wenn eine Verstellung zur Feineinstellung erfolgen soll. Der Kopf 16 der Spannschraube 6 ist in einer Vertiefung in dem Grundkörper 1 gelagert. Dieser Kopf 16 ist mit Aufnahmeöffnungen für ein Werkzeug versehen, damit das Lösen und Festziehen erfolgen kann. Zu diesem Zweck weist der Grundkörper 1 einen Ausschnitt 22 auf. Durch diesen ist der Kopf 16 der Spannschraube zugänglich.

Die Spannschraube geht durch die beiden Körper 2 und 3 durch eine Bohrung 23 hindurch, deren Durchmesser größer ist als der Durchmesser der Spannschraube, so daß die Bewegungen der beiden Körper 2 und 3 in der Ebene senkrecht zur Spannschraube möglich sind. In dem Abschlußkörper 4 befindet sich ein Gewinde 17, in das die Spannschraube hineingeschraubt wird.

Zwischen dem Grundkörper 1 und dem ersten Führungskörper 2 ist ein Gewindering 5 angeordnet, der auf ein Gewinde 18 an dem Grundkörper 1 aufgeschraubt ist, das zentrisch zu der Spannschraube und der entsprechenden Durchgangsbohrung liegt. Der Gewindering ist ebenso wie der Kopf 16 der Schraube von außen zugänglich, so daß ein Werkzeug in die Werkzeugaufnahme eingreifen kann.

An dem ersten Führungskörper 2 ist eine Feder 10 vorgesehen, die in eine Nut in dem zweiten Führungskörper 3 eingreift. Senkrecht hierzu ist an dem zweiten Führungskörper 3 eine Feder 11 vorgesehen, die in eine Nut 14 des Abschlußkörpers 4 eingreift. Hierdurch ist der zweite Führungskörper 3 in einer Richtung in der Ebene senkrecht zur Spannschraube und der Abschlußkörper 4 in dieser Ebene senkrecht zu dem zweiten Führungskörper 3 bewegbar.

Um diese Bewegungen in der Ebene senkrecht zur Spannschraube durchzuführen, sind für jede Nut- und Federverbindung zwei Stellschrauben 8 und 9 vorgesehen. Durch Drehung dieser Stellschrauben, die an der entsprechenden Feder zur Anlage gelangen, wird diese Feder und damit entweder der zweite Führungskörper 3 oder der Abschlußkörper 4 in der gewünschten Richtung in der Ebene senkrecht zur Spannschraube verstellt. Die Stellschrauben 8 und 9 werden von Gewindebohrungen 19 in dem entsprechenden Körper aufgenommen und von außen verstellt.

Der Grundkörper 1 wird mit Hilfe von Vorsprüngen 12 oder dergleichen an der Spannvorrichtung befestigt.

Zwischen dem Grundkörper 1 und dem ersten Führungskörper 2 sind Führungsstifte 7 in entsprechenden Führungsbohrungen angeordnet. Diese Führungsstifte erlauben die senkrechte Bewegung des ersten Führungskörpers 2 in Achsrichtung der Spannschraube 6, wenn der Gewindering 5 entsprechend gedreht wird.

Wenn eine Feineinstellung, beispielsweise aus der Stellung nach Fig. 2, in die Stellung nach Fig. 3 erfolgen soll, wird zuerst die Spannschraube 16 durch ein entsprechendes Werkzeug gelöst. Dann wird der Gewindering 5 nach links gedreht, bis der erste Führungskörper 2 soweit angehoben ist, wie es gewünscht wird. Dann werden die Stellschrauben 8 gedreht, um entsprechend auf die Feder 10 einzuwirken und den Führungskörper 3 in der gewünschten Richtung in der Ebene senkrecht zur Achse der Spannschraube zu verschieben. In gleicher Weise wird der Abschlußkörper 4 mit Hilfe der Stellschrauben 9 verschoben. Wenn der Abschlußkörper und damit der an ihm befestigte Anschlag oder ein entsprechendes Teil die gewünschte Position erreicht hat, wird die Spannschraube 6 festgezogen.

Es ist ohne weiteres erkennbar, daß der Abschlußkörper 4 und damit das an ihm befestigte Stück sehr genau in jeder gewünschten Position innerhalb eines bestimmten Rahmens eingestellt werden kann. Es ist eine exakte Bewegung in sämtlichen drei Achsrichtungen Z, X und Y möglich.

Selbstverständlich können einzelne Führungen anders gestaltet sein. Anstelle der Nut- und Federverbindung können auch andere maschinenbauliche Mittel gewählt werden, um die Bewegung in der entsprechenden Ebene und in der gewünschten Richtung sicherzustellen.

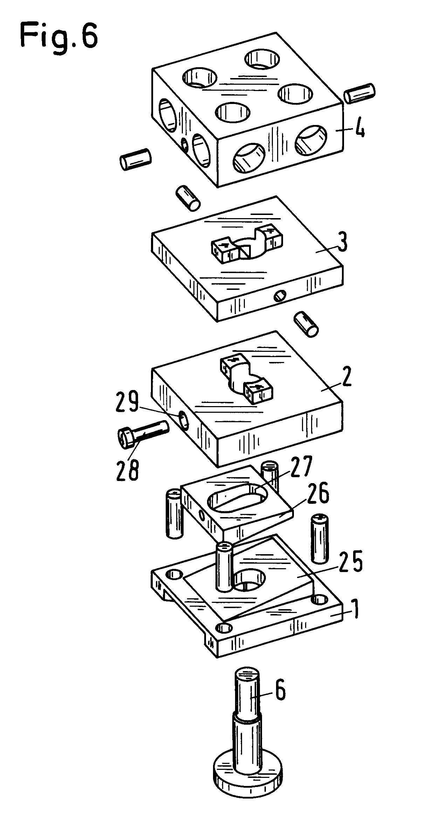

In Fig. 6 ist eine andere Ausführungsform dargestellt, bei der für die Bewegung in der Z-Achse anstelle des Gewinderinges 5 ein Ziehkeil 26 zwischen dem ersten Führungskörper 2 und dem Grundkörper 1 angeordnet ist. Der Grundkörper 1 weist eine entsprechende Keilfläche 25 auf. In dem Ziehkeil 26 ist ein Langloch 27 vorgesehen, durch das die Spannschraube 6 hindurchgeht. Der Ziehkeil 26 ist in Richtung des Langloches 27 durch eine Stellschraube 28 hin- und herbewegbar, die in ein Gewinde 29 in dem ersten Führungskörper 2 eingeschraubt ist.

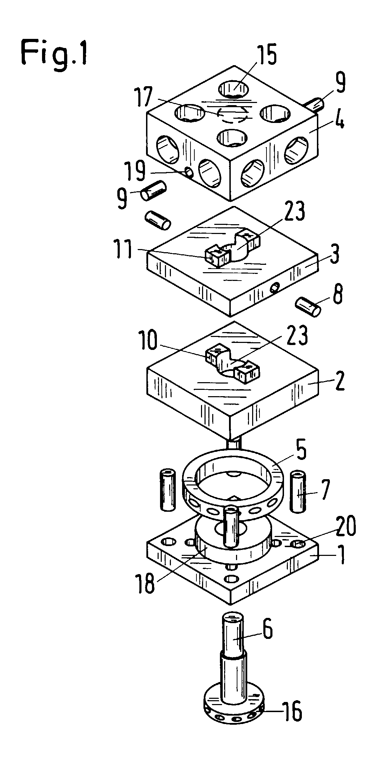

Bei dieser Ausführungsform wird eine größere Auflagefläche zur Verfügung gestellt, so daS einem Kippen und Wackeln entgegengewirkt wird. Zur Verstellung in Z-Richtung, d.h. in Achsrichtung der Spannschraube 6, wird die Stellschraube 28 gedreht und dadurch der Ziehkeil 26 verschoben. Bedingt durch die Ausbildung als Langloch 27 behindert die Spannschraube 6 diese Bewegung nicht. Die übrigen Bauteile entsprechen der Ausführungsform nach Fig. 1.

## Patentansprüche

1. Vorrichtung zur Feineinstellung von Anschlägen, Aufnahmebolzen, Konturpaßstücken und dergleichen, an Spannvorrichtungen, insbesondere für Meß- und Werkzeugmaschinen,
mit
einem Grundkörper (1) zur Befestigung an der Spannvorrichtung und einer Spannschraube (6),
einem ersten, an dem Grundkörper angeordneten Führungskörper (2), der in Achsrichtung der Spannschraube verstellbar ist,
einem zweiten, an dem ersten Führungskörper angeordneten Führungskörper (3), der quer zur Achsrichtung der Spannschraube verstellbar ist, und
einem an dem zweiten Führungskörper (3) angeordneten Abschlußkörper (4), der in der Verstellebene des zweiten Führungskörpers, aber senkrecht zu dessen Verstellrichtung, verstellbar ist,
wobei die Spannschraube (6) durch Bohrungen (23) in den übereinander angeordneten vier Körpern (1,2,3 und 4) hindurchgeht.

2. Vorrichtung nach Anspruch 1, dadurch gekennzeichnet, daß sich der Kopf (16) der Spannschraube (6) in dem Grundkörper (1) abstützt,
daß die Durchmesser der Bohrungen (23) in den Führungskörpern (2 und 3) soviel größer sind als der Spannschraubendurchmesser, daß die Verstellung in der Ebene senkrecht zur Achse der Spannschraube möglich ist, und
daß eine Gewindebohrung (17) zur Aufnahme des Spannschraubengewindes in dem Abschlußkörper (4) vorgesehen ist.

3. Vorrichtung nach Anspruch 1 oder 2, dadurch gekennzeichnet, daß zur Verstellung des ersten Führungskörpers (2) in Achsrichtung der Spannschraube (6) zwischen dem Grundkörper (1) und dem ersten Führungskörper (2) ein Gewindering (5) angeordnet ist, der auf ein Gewinde (18) aufgeschraubt ist, das zentrisch zu der Spannschraube (6) ausgebildet ist.

4. Vorrichtung nach Anspruch 1 oder 2, dadurch gekennzeichnet, daß zur Verstellung des ersten Führungskörpers (2) in Achsrichtung der Spannschraube (6) zwischen dem Grundkörper (1) und dem ersten Führungskörper (2) ein Ziehkeil (26) mit einer Keilfläche angeordnet ist, der auf einer angrenzenden Keilfläche (25) des Grundkörpers (1) aufliegt und durch eine Stellschraube (28) senkrecht zur Achsrichtung der Spannschraube (6) verstellbar ist.

5. Vorrichtung nach Anspruch 3 oder 4, dadurch gekennzeichnet, daß zwischen dem Grundkörper (1) und dem ersten Führungskörper (2) parallel zu der Spannschraube (6) Führungsstifte (7) in Führungsbohrungen vorgesehen sind.

6. Vorrichtung nach einem oder mehreren der vorstehenden Ansprüche, dadurch gekennzeichnet, daß zwischen dem ersten Führungskörper (2) und dem zweiten Führungskörper (3) sowie zwischen dem zweiten Führungskörper (3) und dem Abschlußkörper (4) Nut- und Federführungen (10,11,14) vorgesehen sind, die senkrecht zu einander liegen.

7. Vorrichtung nach Anspruch 6, dadurch gekennzeichnet, daß für jede Nut- und Federführung (10,11) Stellschrauben (8,9) zur Feineinstellung vorgesehen sind.
